Europäisches Patentamt

European Patent Office

Office européen des brevets

(11) Publication number: **0 417 748 A2**

# EUROPEAN PATENT APPLICATION

(21) Application number: 90117524.0

(22) Date of filing: 11.09.90

(51) Int. Cl.5: **G06F 13/26**

(30) Priority: 11.09.89 JP 234956/89

(43) Date of publication of application:
20.03.91 Bulletin 91/12

(84) Designated Contracting States:
DE FR GB

(71) Applicant: Kabushiki Kaisha Toshiba
72, Horikawa-cho Saiwai-ku
Kawasaki-shi(JP)

(72) Inventor: Wada, Tetsuro, c/o Intellectual
Property Division
Kabushiki Kaisha Toshiba, 1-1 Shibaura
1-chome
Minato-ku, Tokyo 105(JP)

(74) Representative: Lehn, Werner, Dipl.-Ing. et al
Hoffmann, Eitle & Partner Patentanwälte
Arabellastrasse 4
W-8000 München 81(DE)

(54) Interrupt control circuit for use in 1-chip microcomputer.

(57) A plurality of interrupt processing circuits (21-1 to 21-4) are respectively provided in a plurality of interrupt request circuits such as a serial input/output circuit, an analog/digital converter, a timer, and a parallel input/output circuit. A mode register (22) and a priority controller (23) are provided common to these interrupt processing circuits (21-1 to 21-4). Each of these interrupt processing circuits (21-1 to 21-4) comprises a control circuit (24) and a control register (25). In each control circuit (24), interrupt request signals (IREQ) from the interrupt request means or data from a CPU through an internal data bus (19) is latched by an internal latch, and subjected to a predetermined processing therein. Thereafter, the processed data is output as an interrupt signal (REQ) to the priority controller (23).

F I G. 2

# INTERRUPT CONTROL CIRCUIT FOR USE IN 1-CHIP MICROCOMPUTER

This invention relates to an interrupt control circuit for use in a 1-chip microcomputer, and more particularly to an interrupt control circuit having priority determining means which is easy to inspect.

An interrupt control circuit for use in a microcomputer or the like determines priority of a plurality of interrupt requests, and outputs to the CPU a request of the highest priority.

The conventional interrupt control circuit has a plurality of interrupt request latches. Each of the latches is set in response to interrupt request signal sent from interrupt request means such as a serial or parallel input/output circuit, an A/D converter, a timer, or the like, and reset in response to an interrupt request clear signal.

If the interrupt control circuit is an LSI circuit such as 1-chip microcomputer, an interrupt request signal can be input through a terminal of the microcomputer. In this case, in order to inspect the circuit, a desired inspection pattern is supplied from an external circuit, thereby setting each interrupt request latch to a desired state.

In contrast, if the interrupt control circuit is incorporated in a 1-chip microcomputer, an interrupt request signal is directly input to the circuit from the input/output circuit also incorporated in the microcomputer, not from an external circuit. In this case, in order to set a specific interrupt request latch to a desired state, the input/output circuit connected to the interrupt request latch must be set to an appropriate state. This is a critical drawback in inspecting the priority determining means used in the interrupt control circuit in three respects. First, the interrupt control circuit cannot be inspected independently. Second, a great number of inspection patterns must be input to inspect many combinations of circuits, which may lengthen the inspecting time very much. Third, the inspection patterns required may be very complicated.

The second and third drawbacks are prominent, especially when the input/output circuit has many functions, and a great number of interrupt request signals are therefore generated. The second and third drawbacks are also great, when the input/output circuit includes a timer, which outputs signals at regular intervals.

As described above, the conventional interrupt control circuit for use in a 1-chip microcomputer is disadvantageous in that a long period of time is required for inspecting the priority determining function, and the inspecting operation is complicated.

The present invention has been made in consideration of the above circumstances, and its object is to provide an interrupt control circuit for use in a 1-chip microcomputer having priority determining means which is easy to inspect.

According to a first aspect of the present invention, there is provided an interrupt control circuit for use in a 1-chip microcomputer, comprising a CPU, a plurality of interrupt request means, each generating interrupt request signals to be supplied to the CPU, and interrupt control/priority determining means, connected to the CPU via an internal data bus, supplied with the interrupt request signals generated by the plurality of interrupt request means for determining the priority of the interrupt request signals and outputting the highest priority interrupt request signals to the CPU, and supplied with an interrupt request signal from the CPU through the internal data bus.

According to a second aspect of the present invention, there is provided an interrupt control circuit for use in a 1-chip microcomputer, comprising a CPU, a plurality of interrupt request means, each generating interrupt request signals to be supplied to the CPU, mode data storing means for storing mode data for discriminating between a normal operation mode and an inspection mode, a plurality of interrupt request latching means for latching the interrupt request signals from the interrupt request means when the mode data storing means stores data corresponding to the normal operation mode, and latching data on the internal data bus as an interrupt request signal when the mode data storing means stores data corresponding to the inspection mode, and a priority determining means for determining the priority of the interrupt requests stored in the plurality of interrupt request holding means.

This invention can be more fully understood from the following detailed description when taken in conjunction with the accompanying drawings, in which:

Fig. 1 is a block diagram showing the entire structure of a 1-chip microcomputer including an interrupt control circuit according to the present invention;

Fig. 2 is a block diagram showing the interrupt control circuit shown in Fig. 1;

Fig. 3 is a circuit diagram showing a detailed structure of the control circuit of the interrupt control circuit shown in Fig. 2; and

Fig. 4 shows the data memory state in the control register shown in Fig. 2.

An embodiment of the present invention will be described below with reference to accompanying drawings.

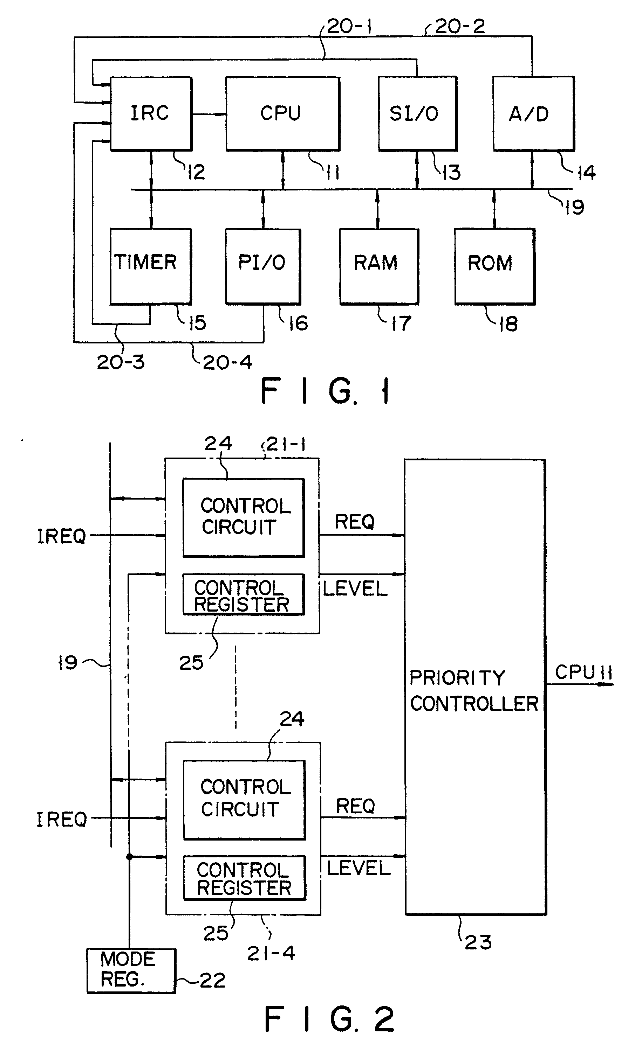

Fig. 1 shows the entire structure of a 1-chip microcomputer including an interrupt control circuit according to the present invention. As is illustrated in Fig. 1, the 1-chip microcomputer comprises central processing unit (CPU) 11, interrupt control circuit (IRC) 12, serial input/output circuit (SI/O) 13, analog/digital converter (A/D) 14, timer 15, parallel input/output circuit (PI/O) 16, random access memory (RAM) 17, and read-only memory (ROM) 18, all of which are connected to one another through internal data bus 19.

Serial input/output circuit 13, analog/digital converter 14, timer 15 and parallel input/output circuit 18 are interrupt request means which request interrupt for CPU 11. These interrupt request means output interrupt request signals, which are supplied to interrupt control circuit 12 through exclusive interrupt signal lines 20-1 to 20-4. When interrupt control circuit 12 receives interrupt request signals, it determines the priority of the interrupt request signals in accordance with the predetermined priority of the interrupt requesting means and the priority level of the request signals output from each interrupt request means, and supplies the highest priority interrupt request signal to CPU 11.

Fig. 2 shows interrupt control circuit (IRC) 12 shown in Fig. 1. Interrupt control circuit (IRC) 12 comprises four interrupt processing circuits 21-1 to 21-4 corresponding to the above-mentioned four interrupt request means, serial input/output circuit 13, analog/digital converter 14, timer 15, and parallel input/output circuit 18. Interrupt control circuit (IRC) 12 also comprises mode register 22 and priority controller 23 both of which are common to those interrupt processing circuits 21-1 to 21-4. Each cf interrupt processing circuits 21-1 to 21-4 has control circuit 24 and control register 25.

An interrupt request signal IREQ output from one of the interrupt request means and transmitted through the exclusive signal line (20-1, 20-2, 20-3 or 20-4), data consisting of a plurality of bits transmitted through internal data bus 19, and data stored in mode register 22 are supplied in parallel to each of interrupt processing circuits 21-1 to 21-4.

In each interrupt processing circuit, the interrupt request signal IREQ from an interrupt request means or the data supplied through internal data bus 19 is latched by an internal latch and subjected to a predetermined processing. Then, the processed data is output as an interrupt signal REQ to priority controller 23. Control register 25 stores data representing the interrupt priority levels of interrupt request signals from the interrupt request means, which is output as a level signal LEVEL to priority controller 23 together with the above-mentioned interrupt signal REQ.

Priority controller 23 determines the priority of the interrupt request signals in accordance with the signals output from interrupt processing circuits 21-1 to 21-4, and transmits the highest priority interrupt request signal to CPU 11.

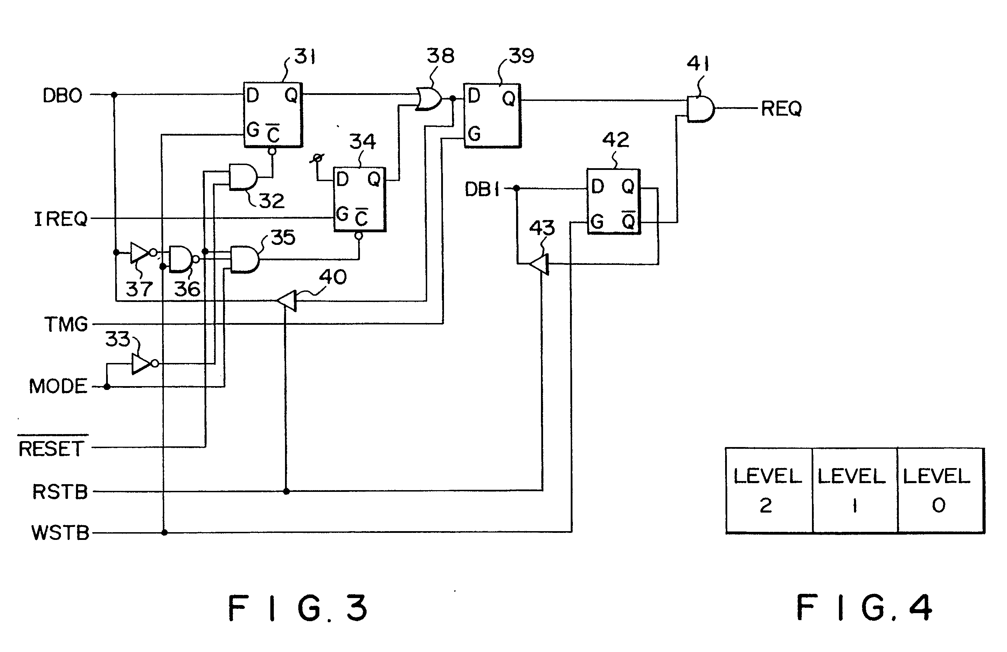

Fig. 3 is a circuit diagram showing in detail the structure of the interrupt processing circuits 21-1 to 21-4. Since all of circuits 21-1 to 21-4 have the same structure, only circuit 21-1 will be described below. Internal data bus 19 transmits data constituted by a plurality of bits, and data of the least significant bit DB0 is supplied to the data input terminal (D) of 1-bit latch circuit 31. A write control signal WSTB is supplied to the control input terminal (G) of latch control circuit 31. An output signal of AND gate circuit 32 is supplied to the clear input terminal (C) of latch control circuit 31. Date MODE stored in mode register 22 is supplied to one of the two input terminals of AND gate circuit 32 via inverter 33, and a system reset signal $\overline{RESET}$ is supplied to the other input terminal thereof.

The interrupt request signal IREQ output from the interrupt request means is supplied to the control terminal (G) of 1-bit latch circuit 34. The data input terminal (D) of latch circuit 34 is connected to the power source set at a "H" level. The output signal of three-inputs AND gate circuit 35 is supplied to the clear input terminal (C) of latch circuit 34. The above-mentioned data MODE is input to a first input terminal of AND gate circuit 35, the system reset signal $\overline{RESET}$ to a second input terminal, and the output signal of NAND gate circuit 36 to a third input terminal. Data of the least significant bit DB0 of internal data but 19 is supplied to one of the input terminals of NAND gate circuit 36 via inverter 37, and the write control signal WSTB is supplied to the other input terminals thereof.

Signals output from the output terminals (Q) of latch circuits 31 and 34 are supplied in parallel to the input terminals of two-inputs OR gate circuit 38. An output signal of OR gate circuit 38 is supplied to the data input terminal (D) of timing set 1-bit latch circuit 39, and also to the least significant bit DB0 of internal data but 19 through transfer gate 40. A timing signal TMG is supplied from a timing signal generating circuit (not shown) to the control input terminal (G) of latch circuit 39. An output signal from the terminal (Q) of latch circuit 39 is supplied to one of the input terminals of AND gate circuit 41.

1-bit latch circuit 42 serves as a mask for masking an interrupt request signal. Data of the bit DB1, the bit immediately upper than the least significant bit DB0 of internal data bus 19, is supplied to the data input terminal (D) of latch circuit 42. The mask signal MASK is supplied to the control input terminal (G) of latch circuit 42. An output signal from the output terminal ($\overline{Q}$) of latch circuit 42 is supplied to the other input terminal of AND gate circuit 41. An output signal from the output terminal (Q) of latch circuit 42 is supplied to DB1 of internal data bus 19 via transfer gate 43.

Transfer gates 40 and 43 are operated under control of a read control signal RSTB.

The other interrupt processing circuits 21-2 to 21-4 have the same structure as the above-described circuit 21-1, except for the bit of the internal data bus.

Fig. 4 shows the memory state of each of control registers 25 shown in Fig. 2. As illustrated in Fig. 4, data of three interrupt priority levels is written in the control register. The signals RSTB and WSTB are respectively used to read/write data from/into control register 25. These signals are set by software executed by CPU 11 (Fig. 1). The data representing one of the three interrupt priority levels is supplied to priority controller 23, and utilized therein to determine the priority of the interrupt request signals.

The operation of the above-described interrupt control circuit will now be described.

CPU 11 causes mode register 22 to store data through software processing. For example, "1" level data is stored in mode register 22 in a normal operation, and "0" level data in an inspection mode. A system reset signal $\overline{RESET}$ is set to a "0" level. At this time, the output signals of AND gate circuits 32 and 35 are also set to a "0" level, with the result that latch circuits 31 and 34 are reset. Thereafter, system reset signal $\overline{RESET}$ rises to a "1" level.

In a normal operation mode, when an interrupt request signal IREQ is input to any one of interrupt processing circuits 21-1 to 21-4, "1" level data is latched by latch circuit 34 in the interrupt processing circuit, and the output at the terminal (Q) of latch circuit 34 is of "1" level. As a result, the output of OR gate circuit 38 becomes "1" level. Then, the timing signal generating circuit (not shown) outputs a timing signal TMG, and the output at the terminal (Q) of latch lu circuit 39 becomes "1" level. At this time, if the output at the terminal ( $\overline{Q}$ ) of latch circuit 42 serving as a mask is of "1" level, i.e., if latch circuit 42 is in a non-masking state, the output of AND gate circuit 41 is also of "1" levels As a result, an interrupt request signal REQ is supplied to priority controller 23. Priority controller 23 determines the priority of interrupt request signals supplied from interrupt processing circuits 21-1 to 21-4, and supplies the highest priority interrupt request signal to CPU 11. The interrupt processing is thus executed. After the execution of an interrupt processing, CPU 11 outputs "0" level data to DB0 of internal data bus 19, and supplies write control signal WSTB to control register 25. As a result, the output of inverter 37 is of "0" level, and the output of NAND gate circuit 36 is of "0" level, and the output of AND gate circuit 35 is accordingly of "0" level. Thus, latch circuit 34 is reset.

In an inspection mode, mode data MODE of "0" level is stored in mode register 22 by software processing of CPU 11. At this time, the output of AND gate circuit 35 is set to "0" level and latch circuit 34 is set to the cleared state, while the output of AND gate circuit 32 is set to "1" level and latch circuit 31 is released from the reset state. Latch circuit 31 latches data of DB0 of internal data bus 19, and the output signal from the terminal (Q) is supplied through OR gate circuit 38 to latch circuit 39. Then, when a timing signal TMG is supplied from a timing signal generating circuit (not shown) to latch circuit 39, the output at the terminal (Q) of latch circuit 39 is set in response to the signal supplied to the data input terminal. Thereafter, in the same manner as in the normal operation mode, AND gate circuit 41 outputs an interrupt request signal REQ to priority controller 23, in accordance with the level at the output terminal ( $\overline{Q}$ ) of latch circuit 42 in a masking state or a non-masking state.

To set latch circuit 42 to a masking state, "1" level data is supplied to DB1 of internal data bus 19. and a signal WSTB is supplied to latch circuit 42, thereby setting the output terminal ( $\overline{Q}$ ) of latch circuit 42 to a "0" level. Output signals from terminals (Q) of latch circuits 31 and 34 can be output to DB0 of internal data bus 19, and an output signal from the output terminal (Q) of latch circuit 42 can be output to DB1. The data reading is performed in response to a read control signal RSTB. More specifically, when a read control signal RSTB of "1" level is supplied to the interrupt processing circuit, both transfer gates 40 and 43 are operated, and an output signal from the terminal (Q) of latch circuit 31 or 34 is output to DB0 of internal data bus 19, and an output signal from the terminal Q of latch circuit 42 to DBI thereof. In this embodiment, level set operation of interrupt request is executed by software of CPU 11.

In a conventional interrupt control circuit in which seven interrupt priority levels are stored in the control register and the number of the interrupt request means are 30, an inspecting pattern of 150,000 steps was required to inspect the priority controller. According to the present invention, under the same conditions, the number of the steps of the inspection pattern is 15,000, i.e. 1/10 of that in the conventional apparatus. Hence, it takes 1/10 shorter period of time to inspect the interrupt control circuit, and also to form the inspecting pattern in comparison with the case of the conventional circuit. Thus, the inspection of the interrupt control circuit can be performed very much easily.

As has been described above, the present invention provides an interrupt control circuit for use in a 1-chip microcomputer having priority determining means which is easy to inspect.

Reference signs in the claims are intended for better understanding and shall not limit the scope.

## Claims

1. An interrupt control circuit for use in a 1-chip microcomputer comprising:
a CPU (11);
a plurality of interrupt request means (13, 14, 15, 16), each generating interrupt request signals to be supplied to the CPU; and
interrupt control/priority determining means (12), connected to said CPU (11) via an internal data bus (19), supplied with the interrupt request signals generated by said interrupt request means (13, 14, 15, 16), for determining the priority of the interrupt request signals and outputting the highest priority interrupt request signals to said CPU (11), and supplied with an interrupt request signal from said CPU (11) via said internal data bus (19).

2. An interrupt control circuit for use in a 1-chip microcomputer according to claim 1, characterized in that said interrupt request means (13, 14, 15, 16) includes a timer (15).

3. An interrupt control circuit for use in a 1-chip microcomputer according to claim 1, characterized in that said interrupt control/priority determining means (12) comprises interrupt control means (21-1 to 21-4) of the same number as said interrupt request means (13, 14, 15, 16), for receiving the interrupt request signals (IREQ) from said interrupt request means or the interrupt request signals from said CPU (11), and priority determining means (23) for receiving the interrupt request signals from said interrupt control means and determining the priority of the interrupt request signals.

4. An interrupt control circuit for use in a 1-chip microcomputer according to claim 3, characterized in that each of said interrupt control means (21-1 to 21-4) comprises a control register (25) for storing data corresponding to the interrupt levels of the interrupt request signals.

5. An interrupt control circuit for use in a 1-chip microcomputer according to claim 3, characterized in that said interrupt control/priority determining means (12) further comprises a mode register (22), and each of said interrupt control means (21-1 to 21-4) is allowed to selectively receive the interrupt request signals from said interrupt request means (13, 14, 15, 16) or the interrupt request signal from said CPU (12) through said internal data bus (19).

6. An interrupt control circuit for use in a 1-chip microcomputer comprising:
a CPU (11);
a plurality of interrupt request means (13, 14, 15, 16), each generating interrupt request signals to be supplied to said CPU (11);
a mode data storing means (22) for storing mode data for discriminating between a normal operation mode and an inspection mode;
a plurality of first interrupt request latching means (34), each latching the interrupt request signals from each of the interrupt request means, when the mode data storing means (22) stores data corresponding to the normal operation mode;
a plurality of second interrupt request latching means (31), each latching data supplied from the CPU (11) through the internal data bus (19) as an interrupt request signal, when the mode data storing means (22) stores data corresponding to the inspection mode; and a priority determining means (23) for determining the priority of the interrupt request signals stored in said first and second interrupt request latching means (34, 31).

7. An interrupt control circuit for use in a 1-chip microcomputer according to claim 6, characterized in that said interrupt request means (13, 14, 15, 16) includes a timer (15).

8. An interrupt control circuit for use in a 1-chip microcomputer according to claim 6, characterized in that each of said first and second interrupt request latching means (34, 31) is constituted by a flip flop.

9. An interrupt control circuit for use in a 1-chip microcomputer according to claim 6, characterized by further comprising a plurality of clearing means (37, 36, 35) for clearing the content latched in said first interrupt request latching means (34) in accordance with the data supplied through said internal data bus (19).

10. An interrupt control circuit for use in a 1-chip microcomputer according to claim 8, characterized by further comprising a plurality of data reading control means (40) for supplying the contents of said first and second interrupt request latching means (34, 31) to said internal data bus (19).

11. An interrupt control circuit for use in a 1-chip microcomputer according to claim 6, characterized by further comprising a plurality of third interrupt request latching means (39) for latching the contents of said first and second interrupt request latching means (34, 31) in response to a timing signal supplied at a predetermined timing.

12. An interrupt control circuit for use in a 1-chip microcomputer according to claim 6, characterized by further comprising:
a plurality of data latching means (42) for latching the data supplied from said CPU (11) through said internal data bus (19) as mask data; and
a plurality of control gates (41) for supplying to said priority determining means the content of said data latching means (34) or of said second interrupt request latching means (31) in accordance with the mask data latched in said fourth interrupt request latching means.

13. An interrupt control circuit for use in a 1-chip microcomputer according to claim 12, characterized by further comprising a plurality of data reading control means (43) for supplying the content of said data latching means (42) to said internal data bus (19).

14. An interrupt control circuit for use in a 1-chip microcomputer according to claim 12, characterized by further comprising a plurality of synchronizing means (39) for outputting the content of said first interrupt request latching means (34) or said second interrupt request latching means (31) to said control gate (41) in response to a timing signal supplied at a predetermined timing.

F I G. 1

F I G. 2

FIG. 3

| LEVEL 2 | LEVEL 1 | LEVEL 0 |
|---------|---------|---------|

FIG. 4